# EUROPÄISCHE PATENTSCHRIFT

(11) **EP 2 100 657 B1**
(45) Veröffentlichungstag und Bekanntmachung des Hinweises auf die Patenterteilung: **23.01.2013**
(21) Anmeldenummer: 09008295.9
(22) Anmeldetag: 23.12.2006
(51) Int. Cl.: B01D 53/50, B01D 53/78, B01D 53/48, B01D 53/14, B01D 53/86

(54) **Rauchgasreinigungsvorrichtung**
Exhaust gas cleaning device
Dispositif de nettoyage de gaz de fumée

(43) Veröffentlichungstag der Anmeldung: 16.09.2009
(62) Teilanmeldung aus: 06841162.8
(73) Patentinhaber: Doosan Lentjes GmbH, 40880 Ratingen (DE)
(72) Erfinder: Oberheid, Frank, 46047 Oberhausen (DE); Ziemann-Nöthe, Annette, 54136 Essen (DE); Delle, Frank, 40880 Ratingen (DE); Weitemeier, Martin, 45138 Essen (DE); Pelkman, Aat, 59174 Kamen (DE)
(74) Vertreter: Becker, Thomas

(56) Entgegenhaltungen:
- EP-A- 1 707 875
- DE-A1- 19 527 836
- US-A- 4 495 163
- US-B1- 6 759 019

## Beschreibung

Die Erfindung betrifft eine Rauchgasreinigungsvorrichtung.

Rauchgas, welches insbesondere bei der Verbrennung fossiler Brennstoffe entsteht, enthält unter anderem oftmals einen beachtlichen Anteil an Schwefeloxiden. Auf Grund deren Aggressivität gegenüber der Umwelt soll der Ausstoß an Schwefeloxiden so weit wie möglich vermieden werden.

Hierzu werden Rauchgasreinigungsvorrichtungen eingesetzt.

Vorrichtungen zur Reinigung von Rauchgas sind bereits bekannt, beispielsweise bei Kraftwerken, in denen aus fossilen Brennstoffen Energie erzeugt wird, insbesondere Kohlekraftwerke, Ölkraftwerke, Gaskraftwerke oder dergleichen. Gattungsgemäße Vorrichtungen umfassen normalerweise einen Wäscher mit Waschflüssigkeitsdüsen, die häufig in mehreren Ebenen angeordnet sind, einen Waschflüssigkeitssumpf, in dem Waschflüssigkeit gesammelt wird und einen Absorptionsbereich, der sich in einem zylindrischen Behälterabschnitt des Wäschers vom Waschflüssigkeitssumpf bis zur oberen Waschflüssigkeitsdüsenebene erstreckt. Rauchgas wird in einem unteren Abschnitt des Absorptionsbereiches in den Wäscher geleitet, strömt von dort im Wesentlichen vertikal aufwärts und verlässt den Wäscher durch eine oberhalb der Waschflüssigkeitsdüsen vorgesehene Austrittsöffnung. Die Waschflüssigkeit, auch Absorbens genannt, enthält Stoffe, die unter anderem Schwefeloxide binden beziehungsweise chemisch umwandeln. Auf seinem Weg durch den Wäscher kommt das Rauchgas mit aus den Waschflüssigkeitsdüsen austretender Waschflüssigkeit in Kontakt und wird gereinigt, insbesondere entschwefelt, was nachfolgend näher beschrieben ist. Eine derartige Reinigungsvorrichtung ist beispielsweise aus der DE-A-10058548 bekannt.

Die Waschflüssigkeit umfasst neben Wasser vorzugsweise Stoffe mit Alkali- und/oder Erdalkalianteilen, die mit den im Rauchgas vorhandenen Schwefeloxiden und mit den im Wäscher erzeugten Schwefeloxiden reagieren. Es wird insbesondere Calciumoxid, Calciumhydroxid, Calciumhydrogencarbonat, Calciumcarbonat oder dergleichen verwendet. Bei der Verwendung von Seewasser als Waschflüssigkeit sind bereits erhebliche Mengen an alkalischen Stoffen, insbesondere Hydrogencarbonat, in der Waschflüssigkeit enthalten.

Die alkalischen Stoffe reagieren bei Verwendung von Seewasser als Waschflüssigkeit mit den in dem Rauchgas vorhandenen Schwefeloxiden im Wesentlichen zu Sulfaten, die dann im Seewasser gelöst sind. Das Rauchgas wird auf diese Weise von den unerwünschten Schwefeloxiden gereinigt und tritt aus der Reinigungsvorrichtung aus. Die Waschflüssigkeit hingegen gelangt zusammen mit den in dieser schwebend gehaltenen Sulfatteilchen in den Waschflüssigkeitssumpf und wird dort gesammelt.

Wird die Rauchgasreinigungsanlage mit Kalk betrieben, entsteht im Wesentlichen Calciumsulfat.

Im Fall der Verwendung von Seewasser als Waschflüssigkeit entstehen entsprechend der gelösten alkalischen Stoffe Sulfite als unerwünschte Nebenprodukte. Bei der Rauchgasreinigungsvorrichtung gemäß DE 295 17 698 U und EP 0756890 B1 wird das gebildete Sulfit im Absorbersumpf oxidiert. Durch Oxidationsluft soll CO₂ ausgetrieben werden. Dabei soll die Menge an Waschflüssigkeit so eingestellt werden, dass im Sumpf ein pH-Wert von 3,5 bis 5 herrscht. Maßgebend ist dabei der Überschuss an Bicarbonat. Ein Meerwasserzusatzstrom kann zum Ausgleich des Bicarbonat-Bedarfs über eine Zusatzleitung in den Wäschersumpf geführt werden. Die belüftete Waschflüssigkeit wird anschließend in ein Nachreaktionsbecken geleitet und mit frischem Seewasser gemischt, das über separate Leitungen zugeführt wird.

Gattungsgemäße Rauchgasreinigungsvorrichtungen sind als Wäscher bekannt und oftmals als Wäscherturm ausgebildet. Der Wäscherturm weist in der Regel wenigstens einen unteren Einlass für das ungereinigte Rauchgas auf, unterhalb des Rauchgaseinlasses einen Sumpf für ein Absorbens, oberhalb des Rauchgaseinlasses eine Einheit, mit der das Absorbens in das eintretende Rauchgas gesprüht wird sowie einen im oberen Bereich des Wäscherturms angeordneten Auslass für das gereinigte Rauchgas. Es kommen Verfahren zum Einsatz, die als Absorbens Seewasser verwenden. Seewasser enthält neben alkalischen Stoffen insbesondere Hydrogencarbonat, welche ebenfalls mit den Schwefeloxiden reagieren.

Bei der Verwendung von Seewasser als Absorbens fällt kein Gips an. Zu diesem Zweck wird dem verbrauchten Absorbens Sauerstoff zugeführt, so dass ein möglichst hoher Anteil an Sulfiten zu Sulfaten weiteroxidiert wird.

Es wird eine Rauchgasreinigungsanlage mit verbesserter Verfahrenstechnik gesucht.

Die Erfindung schlägt als Lösung eine Rauchgasreinigungsvorrichtung gemäß Anspruch 1 vor.

Das Becken beziehungsweise ein Gefäß stehen fluidtechnisch mit dem Sumpf des Wäscherturms in Verbindung.

Bei dem Absorbens handelt es sich um das aus der Absorptionsreaktion abgeleitete, im Wesentlichen verbrauchte fluide Absorptionsmittel, gegebenenfalls gemischt mit frischem Absorptionsmittel.

Der Plattenbelüfter erlaubt es, das Oxidans, beispielsweise Luft, über einen vergrößerten Bereich dem Absorbens zuzuführen. Hierdurch kann eine Beschleunigung der Sulfatbildung sowie ein höherer Wirkungsgrad erreicht werden. Theoretisch können Sulfit Restwerte von < als etwas 1,5 Gew.-%, insbesondere < als etwa 1,0 Gew.-% erreicht werden. Angestrebt ist eine vollständige Oxidation. Das rückfließende Seewasser hat dann eine Qualität, die den gängigen Umweltvorschriften entspricht. Der Belüftungsbereich ist ein Teil der Belüftungsvorrichtung, in dem das Absorbens mit dem Oxidans in Kontakt gebracht werden kann.

Der Plattenbelüfter kann beispielsweise durch Platten gebildet sein, die einen Hohlraum aufweisen, der mit einer Oxidansquelle in fluidtechnischer Verbindung steht. Die Oberfläche einer Platte des Plattenbelüfters ist mit wenigstens einer Öffnung versehen, durch die das Oxidans in das Absorbens eintreten kann. Das Oxidans ist oft gasförmig und wird durch die Öffnung in das Absorbens eingeblasen. Der Plattenbelüfter kann mehrere Platten dieser Art aufweisen, die beispielsweise gestapelt oder dergleichen angeordnet sein können. Vorzugsweise sind die Platten mit einer gemeinsamen Oxidansquelle strömungstechnisch verbunden.

Für den Plattenbelüfter sind folgende Ausführungsformen möglich: Im Wesentlichen tellerförmig, im Wesentlichen oval, mit einer perforierten Membran, mit einer austauschbaren Membran, mit Poren für ein fluides Oxidans, wobei die Poren im Mittel einen Durchmesser von etwa 0,1 bis 1,5 mm, vorzugsweise von etwa 0,25 bis 0,9 mm, besonders bevorzugt von etwa 0,4 bis 0,8 mm aufweisen, wobei eine Häufigkeit der Poren in einem Bereich von etwa 1 bis 10 Poren pro cm² liegen kann, die Membran kann anstelle von Poren oder zusätzlich zu Poren wenigstens einen Schlitz aufweisen, die Membran kann aus EPDM gebildet sein.

Gemäß der Erfindung wird Seewasser als Absorbens verwendet. Dadurch können die Kosten reduziert werden. Insbesondere ist dies vorteilhaft für Anlagen, die im Bereich der Küsten installiert sind, bei denen also Seewasser kostengünstig bereitgestellt werden kann.

Ein Belüftungsbereich wird durch ein fluidtechnisch mit einem Sumpf der Rauchgasreinigungsvorrichtung in Verbindung stehendes Belüftungsbecken gebildet. Dies erlaubt es, auch nach dem Wäscher eine Belüftungsvorrichtung separat auszubilden, so dass beide Vorrichtungen voneinander unabhängig für ihre bestimmungsgemäße Aufgabe optimal ausgebildet werden können. Es braucht beispielsweise die Belüftungsvorrichtung hinsichtlich ihrer Abmessungen nicht an die Abmessungen des Wäscherturms angepasst zu werden, dessen Abmessungen durch seinen bestimmungsgemäßen Betrieb als Wäscherturm fest vorgegeben sind. Durch die optimale Ausgestaltungsmöglichkeit des Belüftungsbeckens kann der Wirkungsgrad weiter erhöht werden. Darüber hinaus kann die Belüftungsvorrichtung nach strömungstechnischen Gesichtspunkten optimiert werden, um einen Energieaufwand für eine Strömungserzeugung zu reduzieren. Die Verbindung zwischen Sumpf und Belüftungsbecken erfolgt über einen Durchlass.

Die Plattenbelüfter können sich im Wesentlichen über den gesamten Belüftungsbereich erstrecken. Dies erlaubt es, das Belüftungsbecken hinsichtlich seiner Abmessungen so klein wie möglich auszugestalten. Kosten können eingespart werden.

Gemäß einer Weiterbildung weist die Belüftungsvorrichtung eine Umwälzeinheit für das Absorbens auf. Mit der Umwälzeinheit kann eine zusätzliche Erhöhung der Wirkung der Belüftungsvorrichtung erreicht werden. Durch das Umwälzen des Absorbens kann zudem eine erhöhte Oxidansmenge in das Absorbens eingeführt werden, so dass eine Beschleunigung der Reaktion erreicht werden kann. Plattenbelüfter und Umwälzeinheit können einstückig sein. So können beispielsweise an den Platten Umwälzpumpen oder dergleichen vorgesehen sein. Der Verfahrensablauf kann weiter optimiert werden. Alternativ oder zusätzlich kann eine Umwälzung auch durch eine strömungstechnische Anordnung der Plattenbelüfter, Strömungshindernisse/Einbauten und/oder Gaseinblasung erzeugt werden.

Ferner wird vorgeschlagen, dass der Plattenbelüfter an einem Gitter angeordnet ist. Die Anordnung an einem Gitter erlaubt es, die Plattenbelüfter auf einfache Weise im Belüftungsbecken anzuordnen. Das Gitter hält die Plattenbelüfter in ihrer vorgesehenen Stellung, so dass sie ihre bestimmungsgemäße Funktion optimal wahrnehmen können. Das Gitter kann beispielsweise durch Rohrleitungen gebildet sein, durch die das Oxidans den einzelnen Platten des Plattenbelüfters zugeleitet werden kann. Auf diese Weise wird zugleich eine einfache und bequeme Speisung der Platten des Plattenbelüfters mit dem Oxidans erreicht.

Mit der Erfindung wird ein Verfahren zum Belüften eines Absorbens möglich, wobei dem in einem Belüftungsbereich der Belüftungsvorrichtung angeordneten, flüssigen Absorbens mittels eines in dem Absorbens eingetauchten Plattenbelüfters ein gasförmiges Oxidans zugeführt wird, wobei im Absorbens das Oxidans enthaltende Gasblasen gebildet werden, deren mittlerer Durchmesser im Wesentlichen < als etwa 1,5 mm, vorzugsweise < als etwa 1,0 mm, insbesondere < als etwa 0,7 mm ist. Es hat sich gezeigt, dass die Gasblasen in Vergleich zu bekannten Belüftungsvorrichtungen länger in Kontakt mit dem Absorbens bleiben, da sie auf Grund ihrer Größe nur einer geringen Auftriebskraft im Absorbens ausgesetzt sind. Durch die Erhöhung der Anzahl der Gasblasen kann bei gleicher Oxidansmenge eine Oberflächenvergrößerung des Oxidans mit dem Absorbens erreicht werden, so dass eine Reaktion im gewünschten Sinne beschleunigt und mit einem hohen Wirkungsgrad erreicht werden kann.

Als Oxidans kann im Wesentlichen Sauerstoff, Luft oder ein Gas oder Gasgemisch verwendet werden, das Sauerstoff enthält oder bei Einführen in das Absorbens Sauerstoff freisetzt.

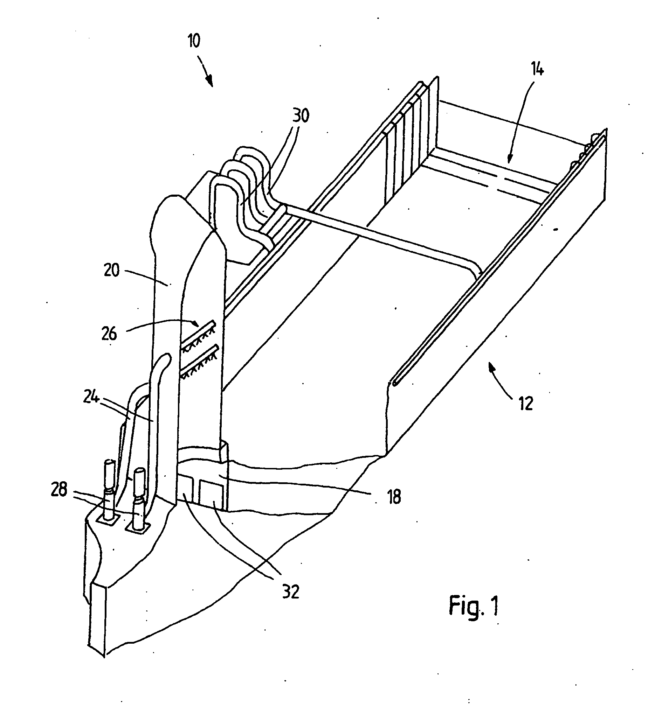

Weitere Merkmale und Vorteile können der folgenden Beschreibung eines Ausführungsbeispiels entnommen werden. Im Wesentlichen gleich bleibende Bauteile sind mit den gleichen Bezugszeichen bezeichnet. Ferner wird bezüglich gleicher Merkmale und Funktionen auf die Beschreibung zum Ausführungsbeispiel in Figur 1 verwiesen. Die Zeichnungen sind Schemazeichnungen und dienen nur der Erläuterung des folgenden Ausführungsbeispiels. Es zeigen
- Figur 1:: Eine perspektivische Ansicht in teilweise geschnittener Darstellung einer Rauchgasreinigungsvorrichtung mit einer Belüftungsvorrichtung und einem Wäscherturm gemäß der Erfindung.
- Figur 2:: Ausschnittweise ein Blockschaltbild für die Rauchgasreinigungsvorrichtung gemäß Figur 1.
- Figur 3:: Eine Draufsicht auf ein Belüftungsbecken der Belüftungsvorrichtung mit an einem Gitter angeordneten Plattenbelüftern, und
- Figur 4:: In vergrößerter Darstellung einen Gitterausschnitt mit Plattenbelüftern.

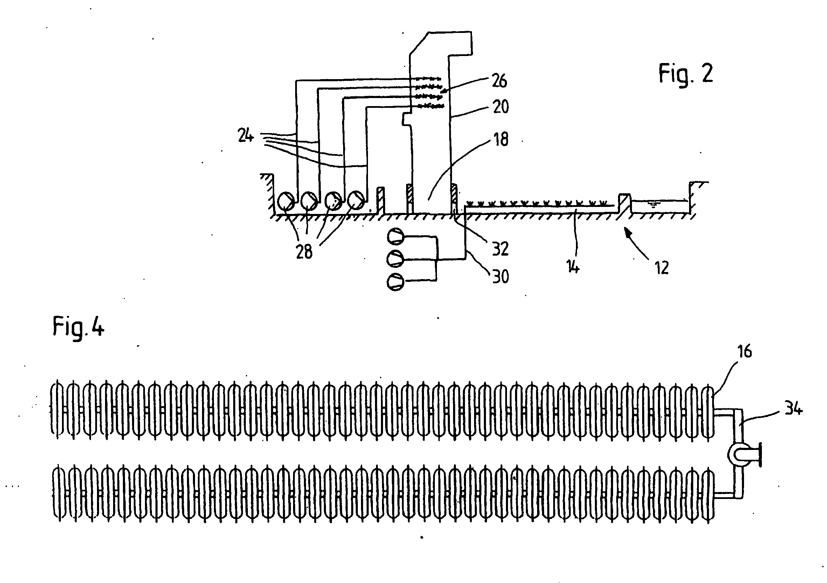

In Figur 1 ist perspektivisch und teilweise als aufgeschnittene Darstellung eine Rauchgasreinigungsvorrichtung 10 dargestellt, die einen Wäscherturm 20 sowie eine Belüftungsvorrichtung 12 aufweist. Der Übersichtlichkeit halber sind der Zuführbereich des zu reinigenden Rauchgases sowie der Abführbereich nicht dargestellt. Der Wäscherturm 20 weist in seinem unteren Bereich einen Sumpf 18 auf, in dem ein Absorbens, im vorliegenden Fall Seewasser, angeordnet ist. Zum Seewasser können noch weitere Stoffe hinzugefügt sein, um die Wirkungsweise der Rauchgasreinigungsvorrichtung 10 zu verbessern. Neben dem Wäscherturm 20 strömungstechnisch in Verbindung mit dem Sumpf 18 sind Pumpen 28 angeordnet, die über Leitungen 24 das Absorbens zu einem Eindüsbereich 26 innerhalb des Wäscherturms 20 führen. Dort wird über nicht näher dargestellte Düsen das Absorbens in Gegenströmung in das dem Wäscherturm 20 von unten nach oben durchströmende Rauchgas eingedüst. Dabei werden unerwünschte chemische Bestandteile im Rauchgas ausgewaschen und/oder chemisch gebunden. Das eingedüste Absorbens sammelt sich wieder im Sumpf 18. Figur 2 zeigt die Rauchgasreinigungsvorrichtung 10 gemäß Figur 1 in schematischer Blockdarstellung.

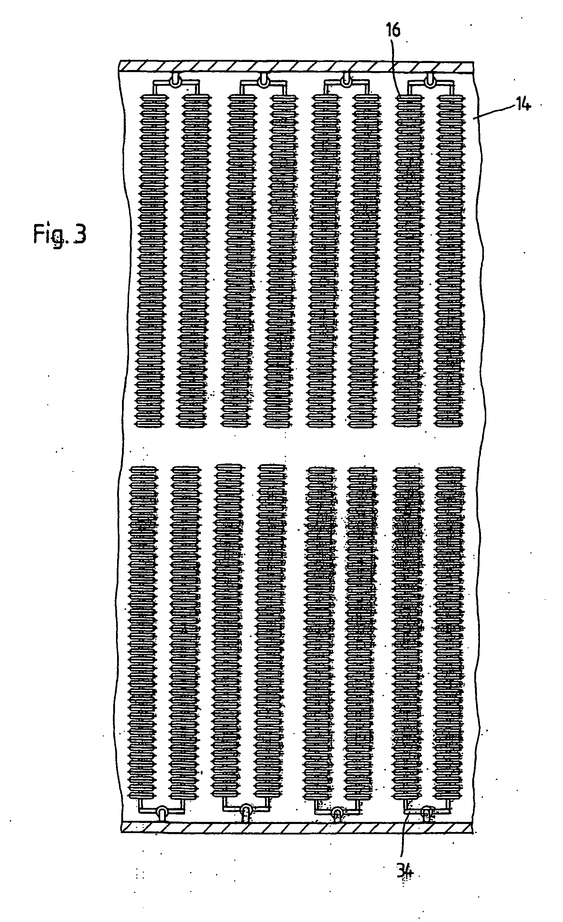

Aus diesem Grund steht der Sumpf 18 mit einem Belüftungsbecken 14 einer Belüftungseinrichtung 12 strömungstechnisch über einen Durchlass 32 in Verbindung. Im Belüftungsbecken 14 ist ein Gitter 34 mit Plattenbelüftern 16 im Absorbens eingetaucht angeordnet. Das Belüftungsbecken 14 weist eine Breite von etwa 20 m und eine Länge von etwa 70 m auf (Figur 3). Am Gitter 34 sind die einzelnen Plattenbelüfter 16 angeordnet und werden über dieses mit Luft als Oxidans versorgt. In der vorliegenden Ausgestaltung weist jedes Gitter 34 eine Länge von etwa 9 m auf, wobei an jedem Gitter 34 Plattenbelüfter 16 in Stapelbauweise angeordnet sind (Figur 4). Jeder Plattenbelüfter 16 ist im Wesentlichen tellerförmig und oval ausgebildet. Dabei ist die große Halbachse der ovalen Erstreckung etwa parallel zur Flüssigkeitsoberfläche des Absorbens ausgerichtet. In der vorliegenden Ausgestaltung beträgt die Abmessung der großen Halbachse etwa 0,7 m und die kleine Halbachse etwa 0,2 m. Die Dicke des Plattenbelüfters 16 liegt bei etwa 0,02 m. Am Gitter 34 sind die Plattenbelüfter 16 im Abstand von etwa 0,1 m angeordnet. Aus einer nicht näher dargestellten Oxidansquelle wird über Leitungen 30 dem Gitter 34 Luft als Oxidans zugeführt. Diese strömt über die Gitter 34 in die Plattenbelüfter 16 und tritt dort durch eine nicht näher dargestellte Membran in das Absorbens aus. Hierdurch wird eine gute Versorgung des Absorbens mit Oxidans erreicht.

Das in den Figuren dargestellte Ausführungsbeispiel dient lediglich der Erläuterung der Erfindung und ist für diese nicht beschränkend.

## Patentansprüche

1. Rauchgasreinigungsvorrichtung mit einem Wäscherturm (20), der mindestens einen unteren Einlass für ungereinigtes Rauchgas aufweist, ferner unterhalb des Rauchgaseinlasses einen Sumpf (18) für ein Seewasser-Absorbens und oberhalb des Rauchgaseinlasses eine Einheit, mit der das Absorbens in das eintretende Rauchgas gespritzt wird, sowie einen im oberen Bereich des Wäscherturms (20) angeordneten Auslass für gereinigtes Abgas, **gekennzeichnet durch** folgende Merkmale:
a) neben dem Wäscherturm (20) sind Pumpen (28) strömungstechnisch in Verbindung mit dem Sumpf (18) angeordnet, so dass Seewasser-Absorbens über eine Wand **durch** einen Durchlass in den Sumpf (18) fließen kann, wobei die Pumpen (28), über Leistungen (24) das Seewasser-Absorbens zu einem Eindüsbereich (26) innerhalb des Wäscherturms (20) führen,
b) der Sumpf (18) steht fluidtechnisch mit einem BelüftungsBecken (14) in Verbindung, welches einen Belüftungsbereich einer Belüftungsvorrichtung (12) bildet,
c) der Belüftungsbereich weist mindestens einen Plattenbelüfter (16) auf, der in das im Belüftungsbereich angeordnete Seewasser-Absorbens eingetaucht ist.

2. Rauchgasreinigungsvorrichtung nach Anspruch 1, bei der der Sumpf (18) und das Becken (14) durch eine Öffnung strömungstechnisch in Verbindung stehen.

3. Rauchgasreinigungsvorrichtung nach Anspruch 1, bei der der Sumpf (18) und das Becken (14) über einen Durchlass (32) strömungstechnisch in Verbindung stehen.

4. Rauchgasreinigungsvorrichtung nach Anspruch 1, bei der der Sumpf (18) und das Becken (14) durch eine Rohrleitung strömungstechnisch in Verbindung stehen.

5. Rauchgasreinigungsvorrichtung nach Anspruch 1, bei der der Sumpf (18) und das Becken (14) ein gemeinsames Becken bilden.

6. Rauchgasreinigungsvorrichtung nach Anspruch 1, bei der ein Belüftungsbereich des Beckens (14) außerhalb eines Bereichs angeordnet ist, der den Sumpf (18) bildet.

7. Rauchgasreinigungsvorrichtung nach Anspruch 1, bei der die Belüftungsvorrichtung (12) eine Umwälzeinheit für das Absorbens aufweist.

8. Rauchgasreinigungsvorrichtung nach Anspruch 1, bei der das Seewasser-Absorbens ein verbrauchtes Seewasser-Absorptionsmittel, gemischt mit frischem Absorptionsmittel, ist.

## Claims

1. Flue gas purification unit with a scrubbing tower (20), comprising at least one lower inlet for non purified flue gas, a sump (18) for a seawater absorbing agent beneath the flue gas inlet, a unit placed above the flue gas inlet for spraying the absorbing agent into the entering flue gas as well as an outlet for the purified flue gas arranged in the upper part of the scrubbing tower (20),
**characterized by** the following features:
a) pumps (28) are arranged side by side with the scrubbing tower (20) such that the seawater absorbing agent flows over a wall and through an opening into the sump (18), wherein the pumps (28) direct the seawater absorbing agent via pipes (24) to a nozzle injecting area (26) inside the scrubbing tower (20),
b) the sump (18) is in fluidic connection with an aeration tank (14), forming an aeration zone of an aeration device (12),
c) the aeration zone has at least one plate aerator (16) which is immersed into the seawater absorbing agent.

2. Flue gas purification unit according to claim 1, wherein the sump (18) and the aeration tank (14) are in fluidic connection through an opening.

3. Flue gas purification unit according to claim 1, wherein the sump (18) and the aeration tank (14) are in fluidic connection via a passage (32).

4. Flue gas purification unit according to claim 1, wherein the sump (18) and the aeration tank (14) are in fluidic connection by a pipe.

5. Flue gas purification unit according to claim 1, wherein the sump (18) and the aeration tank (14) are formed by a common tank.

6. Flue gas purification unit according to claim 1, wherein an aeration zone of the aeration tank (14) is placed outside the sump (18).

7. Flue gas purification unit according to claim 1, wherein the aeration tank (14) comprises a circulation unit for the absorbing agent.

8. Flue gas purification unit according to claim 1, wherein the seawater absorbing agent is a spent absorbing agent, mixed with fresh absorbing agent.

## Revendications

1. Dispositif de nettoyage des fumées comprenant une tour de lavage (20) qui présente au moins une entrée inférieure pour des fumées non nettoyées, de plus un puisard (18) en-dessous de l'admission des fumées pour un absorbant à eau de mer et une unité au-dessus de l'admission des fumées avec laquelle l'absorbant est injecté dans les fumées entrantes, ainsi qu'une évacuation disposée dans l'espace supérieur de la tour de lavage (20) pour les gaz évacués nettoyés, **caractérisé par** les attributs suivants :
a) des pompes (28) sont disposées en liaison par technique d'écoulement avec le puisard (18), près de la tour de lavage (20), de façon à ce que l'absorbant à eau de mer puisse s'écouler dans le puisard (18) à travers un passage via une paroi, sachant que les pompes (28) conduisent l'absorbant à eau de mer via des conduites (24) vers une zone à une tuyère (26) à l'intérieur de la tour de lavage (20),
b) le puisard (18) est en liaison par technique fluidique avec un bassin d'aération (14), lequel forme un espace d'aération d'un dispositif d'aération (12),
c) l'espace d'aération présente au moins un aérateur à panneaux (16) qui est plongé dans l'absorbant à eau de mer disposé dans l'espace d'aération.

2. Dispositif de nettoyage des fumées selon la revendication 1, dans lequel le puisard (18) et le bassin (14) sont en liaison par technique d'écoulement à travers une ouverture.

3. Dispositif de nettoyage des fumées selon la revendication 1, dans lequel le puisard (18) et le bassin (14) sont en liaison par technique d'écoulement via un passage (32).

4. Dispositif de nettoyage des fumées selon la revendication 1, dans lequel le puisard (18) et le bassin (14) sont en liaison par technique d'écoulement par un conduit.

5. Dispositif de nettoyage des fumées selon la revendication 1, dans lequel le puisard (18) et le bassin (14) forment un bassin commun.

6. Dispositif de nettoyage des fumées selon la revendication 1, dans lequel un espace d'aération du bassin (14) est disposé en-dehors d'un espace qui forme le puisard (18).

7. Dispositif de nettoyage des fumées selon la revendication 1, dans lequel le dispositif d'aération (12) présente une unité de brassage pour l'absorbant.

8. Dispositif de nettoyage des fumées selon la revendication 1, dans lequel l'absorbant à eau de mer est un agent absorbant à eau de mer vicié mélangé à un agent d'absorption neuf.
